# EUROPÄISCHE PATENTSCHRIFT

(11) **EP 1 680 498 B1**
(45) Veröffentlichungstag und Bekanntmachung des Hinweises auf die Patenterteilung: **07.07.2010**
(21) Anmeldenummer: 04797571.9
(22) Anmeldetag: 03.11.2004
(51) Int. Cl.: C12C 13/02, C12C 7/20

(54) **VERFAHREN ZUM KOCHEN VON WÜRZE**
METHOD FOR BOILING WORT
PROCEDE POUR LA CUISSON DE MOUT

(30) Priorität: 04.11.2003 DE 10351426
(43) Veröffentlichungstag der Anmeldung: 19.07.2006
(73) Patentinhaber: KRONES Aktiengesellschaft, 93073 Neutraubling (DE)
(72) Erfinder: STIPPLER, Kurt, 85417 Marzling (DE); WASMUHT, Klaus-Karl, 91792 Ellingen (DE)
(74) Vertreter: Grünecker, Kinkeldey, Stockmair & Schwanhäusser Anwaltssozietät
(86) Internationale Anmeldenummer: PCT/EP2004/012439
(87) Internationale Veröffentlichungsnummer: WO 2005/044971

(56) Entgegenhaltungen:
- EP-A- 0 810 280
- EP-A- 1 253 194
- EP-A- 1 469 062
- WO-A-02/12433
- DE-U- 20 107 924

## Beschreibung

Die Erfindung betrifft ein Verfahren zum Kochen von Würze bei der Bierherstellung.

EP 0 810 280 beschreibt eine Vorrichtung mit Innenkocher zur Würzeerhitzung.

Beim Würzekochen wird die Würze bekanntermaßen zum Kochen gebracht. Dabei sind in jüngerer Zeit Systeme bekannt geworden (siehe Brauwelt, Ausgabe 30/03, S. 948ff.), bei denen die Würze durch einen Innenkocher umgepumpt wird, durch dessen Zentrum ein Rohr geführt ist, an dessen oberem Ende ein Würzeverteilschirm angebracht ist. Der Würzeverteilschirm ist so ausgebildet, dass er die Würze durch einen umlaufenden, in seiner Weite einstellbaren Schlitz in dünner Schicht zum Innenraum hin abgibt.

Durch die einstellbare Schlitzweite kann Einfluss auf die Oberfläche des erzeugten Würzeschirms und auch auf die Umwälzrate genommen werden.

Es hat sich gezeigt, dass mit einem solchen System eine schonende Kochung erreicht werden kann.

Die gekochte Würze wird dann aus der Pfanne in den Whirlpool eingeleitet, wo die Trubabscheidung stattfindet. Von dort gelangt die Würze dann zum Plattenkühler.

Um die auf dem Whirlpool noch entstehenden eventuell die Bierqualität beeinträchtigenden Stoffe, wie z.B. freies Dimethylsulfid (DMS) entfernen zu können, ist es auch bekannt, zwischen Whirlpool und Plattenkühler einen Verdampfer, beispielsweise in der Form eines Vakuumverdampfers, anzuordnen. Dies bedingt aber einen entsprechenden apparativen Aufwand und verteuert die Gesamtkosten der Anlage.

Die Aufgabe der Erfindung besteht demgegenüber darin, ein Verfahren vorzuschlagen, mit dem auch das z.B. noch im Whirlpool entstehende DMS mit geringem apparativen Aufwand verringert werden kann.

Diese Aufgabe wird mit einem Verfahren, wie es im Anspruch 1 angegeben ist, gelöst.

Dieses Verfahren macht sich dabei den in der Würzepfanne bereits vorhandenen Dünnschichtverteiler zunutze. Nach diesem Verfahren wird die Würze, wenn sie in der Würzepfanne gekocht worden ist, in den Whirlpool eingeleitet. Dort findet in bekannter Weise die Trubabsetzung statt. Anstatt aber nun über einen weiteren Verdampfer zum Plattenkühler geleitet zu werden, wird die Würze beim erfindungsgemäßen Verfahren wieder zurück in die Würzepfanne gepumpt und dort in den eigentlichen Zwangsumlaufkreis so eingespeist, dass sie über den Dünnschichtverteiler geführt wird. Die Würze erhält also eine schirmartige große Oberfläche, aus der heraus wirkungsvoll z.B. freies DMS verdampfen kann. Die eigentliche Würzepfanne wird also beim erfindungsgemäßen Verfahren auch als Verdampfer eingesetzt. Dadurch ist es nicht erforderlich, einen separaten Verdampfer vorzusehen.

In der Würzepfanne kann die dort vorhandene Umwälzpumpe zum Umpumpen eingesetzt werden. Bevorzugt wird der Innenkocher nicht mit Heißdampf beaufschlagt, wenn die Würzepfanne im Ausdampfbetrieb gefahren wird.

Die Würze kann im Ausdampfbetrieb auch mehrmals über den Dünnschichtverteiler umgepumpt werden, jedenfalls so lange, bis die freien DMS-Werte die angestrebten Werte erreicht haben.

Die zu dieser Durchführung dieses Verfahrens erforderliche Anpassung der Anlagen muss lediglich sicherstellen, dass die Würze vom Whirlpool wieder zurück in die Würzepfanne geleitet und dort in den Zwangsumlaufskreis eingebracht werden kann.

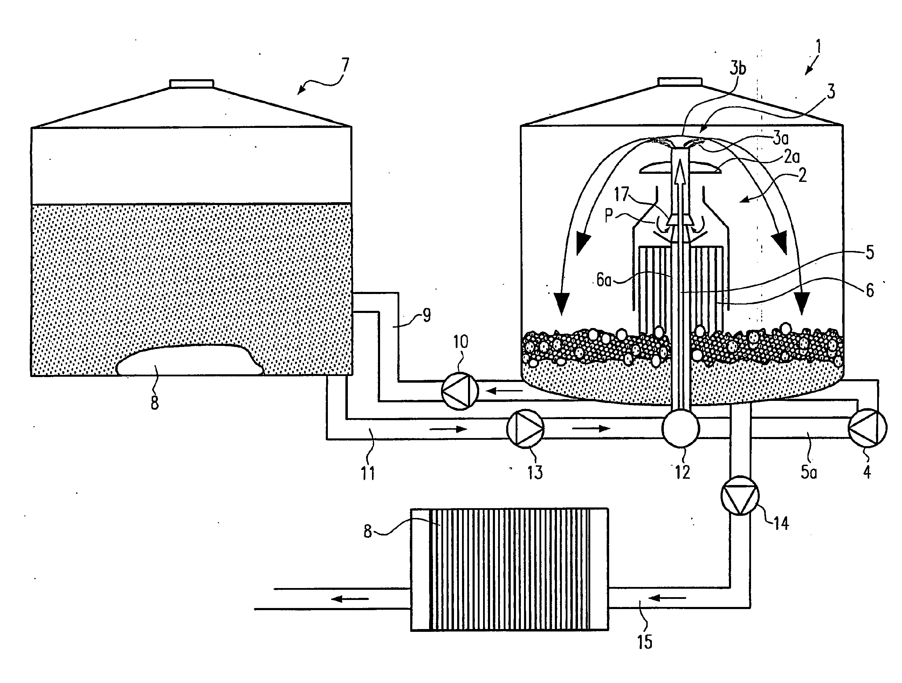

Das erfindungsgemäße Verfahren wird nachfolgend anhand der einzigen Figur, die schematisch die Anlagenkomponenten zur Durchführung des Verfahrens darstellt, erläutert.

Die Anlage umfasst eine Würzepfanne 1. Im Inneren der Würzepfanne ist ein Rohrbündelinnenkocher 2 zentrisch angeordnet. Der Rohrbündelinnenkocher besitzt äußere, z.B. mit Heißdampf beaufschlagbare Rohre 6 sowie ein zentrales mittiges Rohr 5, an dessen oberem Ende ein Dünnschichtverteiler 3 angeordnet ist. Der Dünnschichtverteiler ist in der Art eines Umlenkschirms ausgebildet. Er weist eine untere Umlenkfläche 3a sowie eine obere schirmartig gekrümmte Umlenkfläche 3b auf. Die beiden Flächen 3a und 3b sind gegeneinander verstellbar, so dass die Austrittsschlitzbreite verändert werden kann.

Unterhalb dieses Dünnschichtverteilers gibt es einen weiteren Umlenkschirm 2a, der die von den äußeren Rohrbündeln 6 erwärmte und aufsteigende Würze in den Pfanneninnenraum umlenkt, während der Dünnschichtverteiler den durch das zentrale Innenrohr 5 geleiteten Strom lenkt.

Das zentrale innere Rohr 5 bildet zusammen mit dem Rohrabschnitt 5a und der Pumpe 4 einen Zwangsumlaufkreis für die in der Würzepfanne 1 zu kochende Würze. Mit der Pumpe 4 wird die Würze aus der Pfanne entnommen und über den Leitungsabschnitt 5a und ein Umschaltventil 12 in das zentrale Rohr 5 und von dort über den Dünnschichtverteiler in das Innere der Würzepfanne im Kreislauf umgeführt.

Die Würzepfanne ist über eine Pumpe 10 und eine Leitung 9 mit dem Whirlpool 7 verbunden. Im Whirlpool soll sich der Trub 8 absetzen.

Vom Whirlpool zurück führt eine Leitung 11, in der wiederum eine Pumpe 13 angeordnet ist. Diese Leitung mündet über das Umschaltventil 12 in den Zwangsumlaufkreis, so dass die nun vom Whirlpool kommende Würze in das zentrale innere Rohr 5 geleitet werden kann.

Schließlich ist an die Würzepfanne über eine Pumpe 14 und eine Leitung 15 in herkömmlicher Weise ein Plattenkühler 16 angeschlossen.

Es versteht sich, dass die Verrohrungen unvollständig und auch nur schematisch dargestellt ist, um die Grundzüge des Verfahrens erläutern zu können.

Mit einer solchen Anlage kann das erfindungsgemäße Verfahren nun wie folgt durchgeführt werden:

Die Würze wird zunächst in der Würzepfanne 1 zum Kochen gebracht. Der mit Heißdampf durchströmte Wärmetauscher erhitzt die Würze. Ein Teilstrom steigt über die äußeren Rohrbündeln 6 nach oben und wird von dem Umlenkschirm 2a umgelenkt, während ein anderer Teil im Zwangsumlauf über die Pumpe 4, den Leitungsabschnitt 5a und das zentrale Rohr 5 umgepumpt wird und dabei auch über den Dünnschichtverteiler 3 läuft. Der Anschluss des zentralen Rohrs 5 ist im Übergang zum Dünnschichtverteiler in der Form einer Strahlpumpe ausgestaltet, d.h., die im Rohr 5 aufsteigende Würze reißt, wie die beiden Pfeile P andeuten, auch im oberen Teil des Innenkochers vorliegende Würze mit nach oben zum Dünnschichtverteiler.

Dadurch, dass bereits beim Würzekochen Teilströme immer wieder in dünner Schicht über den Dünnschichtverteiler geführt werden, kann die Würze sehr schonend unter gleichzeitigem wirkungsvollen Abbau schädlicher Aromastoffe gekocht werden.

Nach Beendigung des Kochvorgangs wird die Würze mittels der Pumpe 10 über die Leitung 9 in den Whirlpool 7 umgepumpt. Dort setzt sich der Trub 8 weitgehend ab. Während dieser Whirlpoolphase finden weitere Stoffaussetzungen statt. So entsteht u.a. bekanntermaßen weiteres freies Dimethylsulfid, was unter Umständen negative geschmackliche Auswirkungen auf die erhaltenen Biere haben kann.

Um insbesondere diese Stoffe entfernen zu können, wird die Würze nun wiederum mittels einer Pumpe 13 übe r die Leitung 11 und das Umschaltventil 12 in den Zwangsumlaufskreis, genauer, an das untere Ende des zentralen Rohrs 5, eingeleitet, wobei die Würze mit der Pumpe 13 dann über den Dünnschichtverteiler 3 gefördert werden kann, so dass aufgrund der damit erreichten sehr großen Oberfläche eine wirksame Ausdampfung restlicher unerwünschter Aromastoffe stattfindet.

Nach dem vollständigen Umpumpen über die Leitung 11 in die dann als Ausdampfgefäß wirkende Würzepfanne kann das Umpumpen auch über die Pumpe 4 und die Leitung 5a nach entsprechendem Umschalten des Umschaltventils 12 einige Male erfolgen. Der Innenkocher bleibt dabei als Kocher außer Betrieb, d.h., wird nicht mit Heißdampf beaufschlagt. Es kann aber durchaus daran gedacht sein, eine bestimmte unterhalb der Kochtemperatur liegende Temperatur mit dem Kocher zu fahren, um die Ausdampfprozesse geeignet zu steuern. Zu diesem Zweck könnte vorgesehen sein, nur den inneren, das Zentralrohr umgebenden Abschnitt des Wärmetauschers separat anströmbar zu gestalten, so dass das Zentralrohr von einem kleinen Heizmantel umgeben wird, der dann zur Temperierung der Würze dienen könnte. In der Zeichnung haben wir diesen Bereich mit 6a bezeichnet.

Nach genügender Behandlung wird die Würze dann über die Pumpe 14 und die Leitung 15 zum Plattenkühler 16 verbracht, wo sie bekannterweise gekühlt und von dort z.B. in die Gärtanks gelangt.

Durch die erfindungsgemäße Verfahrensführung erübrigt sich ein separates Ausdampfgefäß, weil die Würzepfanne diese Funktion übernehmen kann.

## Patentansprüche

1. Verfahren zum Kochen von Würze bei der Bierherstellung mit folgenden Schritten:
a) die Würze wird in einer Würzepfanne (1) mit Hilfe eines Rohrbündelinnenkochers (2) in einem Zwangsumlaufkreis (4, 5a, 5, 3), der einen oberhalb des Innenkochers angeordneten Dünnschichtverteiler (3) enthält, mit einer Pumpe (4) umgepumpt und gekocht;
b) die Würze wird danach in einen Whirlpool (7) gepumpt;
c) die Würze wird danach vom Whirlpool (7) über den Dünnschichtverteiler (3) der Würzepfanne gepumpt und anschließend
d) gekühlt.

2. Verfahren nach Anspruch 1, **dadurch gekennzeichnet, dass** die Würze im Schritt c) in den Zwangsumlaufkreis der Würzepfanne (1) eingeleitet wird.

3. Verfahren nach Anspruch 1 oder 2, **dadurch gekennzeichnet, dass** der Innenkocher (2) im Schritt c) nicht mit Dampf beaufschlagt wird.

4. Verfahren nach wenigstens einem der vorangegangenen Ansprüche, **dadurch gekennzeichnet, dass** das Zentralrohr durch den inneren, das Zentralrohr umgebenden Bereich des Rohrbündelinnenkochers beheizt wird.

## Claims

1. Method for boiling wort in the production of beer, having the following steps:
a) the wort is pumped by a pump (4) in a wort copper (1), with the aid of an internal shell and tube boiler (2), around a forced circulation circuit (4, 5a, 5, 3), which comprises a thin-film distributor (3) arranged above the internal boiler, and boiled;
b) the wort is then pumped into a whirlpool (7);
c) the wort is then pumped out of the whirlpool (7), through the thin-film distributor (3) of the wort copper, and subsequently
d) cooled.

2. Method according to Claim 1, **characterized in that** in step c) the wort is introduced into the forced circulation circuit of the wort copper (1).

3. Method according to Claim 1 or 2, **characterized in that** in step c) the internal boiler (2) is not charged with steam.

4. Method according to at least one of the preceding claims, **characterized in that** the central tube is heated by the internal region of the tube bundle internal boiler, this region surrounding the central tube.

## Revendications

1. Procédé pour la cuisson de moût lors de la fabrication de bière, avec les étapes suivantes :
a) dans une chaudière à moût (1), le moût est mis en circulation à l'aide d'une pompe (4) dans un circuit forcé (4, 5a, 5, 3) qui contient un diffuseur à couche mince (3) disposé au-dessus d'un cuiseur intérieur, et est cuit à l'aide dudit cuiseur intérieur à faisceau de tubes (2) ;
b) le moût est ensuite amené par pompage dans un whirlpool (7) ;
c) le moût est ensuite amené par pompage du whirlpool (7) dans la chaudière à moût par l'intermédiaire du diffuseur à couche mince (3), et ensuite
d) refroidi.

2. Procédé selon la revendication 1, **caractérisé en ce que** le moût est introduit dans le circuit forcé de la chaudière à moût (1) lors de l'étape c).

3. Procédé selon la revendication 1 ou 2, **caractérisé en ce que** le cuiseur intérieur (2), lors de l'étape c), n'est pas sollicité avec de la vapeur.

4. Procédé selon l'une au moins des revendications précédentes, **caractérisé en ce que** le tube central est chauffé par la zone intérieure du cuiseur intérieur à faisceau de tubes qui le traverse.
